Europäisches Patentamt

European Patent Office

Office européen des brevets

(11) Publication number: **0 346 242**
A2

## EUROPEAN PATENT APPLICATION

(21) Application number: **89401606.2**

(22) Date of filing: **09.06.89**

(51) Int. Cl.⁴: **B 32 B 31/24**
B 32 B 27/06, B 29 C 59/10

(30) Priority: **09.06.88 US 204231**

(43) Date of publication of application:
**13.12.89 Bulletin 89/50**

(84) Designated Contracting States:
**AT BE CH DE ES FR GB GR IT LI LU NL SE**

(71) Applicant: **JAMES RIVER CORPORATION OF VIRGINIA**
**Tredegar Street P.O. Box 2218**
**Richmond, VA 23217 (US)**

(72) Inventor: **Mead, Maurice J.**
**216, South John Street**
**Neenah WI 54956 (US)**

**Gooding, Chester W. Jr.**
**119, Dell Court**
**Neenah WI 54956 (US)**

(74) Representative: **David, Daniel**
**KAYSERSBERG 54, avenue Hoche**
**F-75008 Paris (FR)**

(54) Method of manufacturing multi-ply products.

(57) Two plies (12, 14) of a similar material are brought into contact and subjected to a corona treatment (17) to induce and/or enhance the bond between them, and the resulting web is extrusion coated (32) with a polymer to form a composite product (26) with a further enhanced bond between the plies of similar material.

FIG.1

EP 0 346 242 A2

Description

# METHOD OF MANUFACTURING MULTI-PLY PRODUCTS

Background and Summary of the invention

The invention pertains to bonding the plies of multi-ply products such as webs of fibrous material plies (e.g., paper) as well as to coating such webs with a polymeric material (e.g., polyethylene).

In manufacturing multi-ply products one of the important considerations is the bond between the plies and, accordingly, much effort has been devoted to bond characteristics. Some of the more, common process involve the use of adhesives, pressure and embossing. Each can be used to bond similar or dissimilar materials, and each seeks a workable balance of advantages and inherent shortcomings. For example, adhesives can be used to provide a bond which can have nearly any selected degree of ply-to-ply adhesion, but adhesives can be expensive and can respond to environmental factors differently from the ply material. Pressure when used alone can bond well only some materials, and when used in combination with adhesives can add expense and other difficulties due to the dissimilarity between the adhesive material and the ply materials. Embossing can work well, but requires a mechanical treatment which can change the ply characteristics in ways which may not always be desirable.

It has been proposed in the prior art to help bond plies of dissimilar material by exposing them to a gas discharge plasma just before and simultaneously with bringing them in contact, and then heating and compressing them into a multi-ply product. For example, U.S. Patent No. 3,959,567 refers to bonding resins to cellophane, polyester or aluminum. Further, U.S. Patent No. 3,823,061 proposes using a corona treatment to help bond plies such as a polyolefin film to a film containing acrylonitrile polymer. Similarly, U.S. Patent No. 3,660,190 proposes the use of a corona discharge treatment to help bond dissimilar plies. In addition, use of a corona discharge treatment or of electrodes is proposed in U.S. Patents Nos. 2,615,822, 2,740,184, 2,972,196, 3,340,125, 3,669,709 and 4,518,681. Moreover, it is believed that use has been made in the prior art of a corona discharge treatment to bond paper to polymeric film by applying the treatment to the combination of paper plies and polymeric film. For a further discussion of plasma bonding, see : Goring, D.A.I., "Plasma-Induced Adhesion in Cellulose and Synthetic Polymers", Transactions of BPBIF, September 1975 (published 1976) ; Goring D.A.I., "Surface Modifications of Cellulose in a Corona Discharge, "Pulp & Paper Magazine of Canada, 1967-68 ; Liebergott. N., "Sequential Treatment of Mechanical Pulps with $H_2O_2$ and $O_3$," 1972 ; and Goring, D.A.I., "Surface Modifications of Cellulose in a Corona Discharge, "Pulp & paper Magazine of Canada, 1969-70.

While the known prior use of corona treatment pertains to bonding dissimilar materials, the invention disclosed herein pertains to the unexpected discovery that corona effects of a specified type can enhance the bond of plies of a similar material (e.g., two paper plies), and that bonding of the plies of similar material can be yet further enhanced through extrusion-coating the multi-ply, corona-treated product with a polymeric material (e.g., polyethylene). Another unexpected discovery is that corona treatment can increase the tensile strength, in particular the wet tensile strength, of cellulosic material. The mechanism of the discovered phenomena is not well understood. It may be that the corona treatment alone or the combination of corona treatment and extrusion coating somehow exposes a greater number of fiber sites of the adjacent plies to some form of molecular bonding upon contact, but this is only a hypothesis. Whatever the mechanism may be, it unexpectedly achieves such good bonding that, depending on process parameters, the bond can be made stronger than the fiber tear strength. Further, unexpected improvement in tensile strength is achieved through corona treatments in the case of both single ply and multi-ply materials. While corona treatment could be considered mainly a surface treatment, the invented process appears to produce significant through-the-ply effects.

It is believed that certain bond parameters could be controlled in the invented process through controlling parameters of the corona treatment. Embossing may but need not be used in conjunction with the corona treatment. It is believed that there may be some synergy betwen the properties induced or enhanced by the corona treatment and those induced by a subsequent treatment such as extrusion coating or embossing.

In a nonlimiting example of one process in accordance with the invention, two plies of paper which are loosely wound on a supply roll are fed therefrom to the gap between two electrodes to effect the corona treatment. The resulting multi-ply, corona-treated web is then fed to the extrusion nip between a chill roll and a backup roll where a polyethylene film is formed thereon by extruding polyethylene on the web side which is about to contact the chill roll.

The principles of the invention can be applied to other treatment settings. For example, a single ply can be corona treated and then joined with another ply to form a two-ply web which can be used as is or the bond between the plies can be enhanced further by a further treatment such as pressure bonding, embossing or extrusion-coating of the type set forth above and discussed in more detail below.

Of course, the principles of the invention can also be applied to enhancing the bond between the plies of materials of three or more plies. Such materials of three or more plies can be corona treated in accordance with the invention after the plies are joined, or one of the plies may be corona treated and then joined to the rest, or two or more or the plies can be joined and corona treated and the resulting material may be joined to one or more other plies (which may or may not be corona treated). Other bond enhancing treatment can be applied before and/or after any of the corona treatments carried out in accordance with the invention.

Brief description of the drawing.

Fig. 1 is a diagrammatic view, partially in elevation, showing apparatus for carrying out an example of the invention.

Fig. 2 illustrates plybond test results for napkin material corona treated in accordance with the invention.

Fig. 3 illustrates aging test results for napkin material corona treated in accordance with the invention.

Detailed description

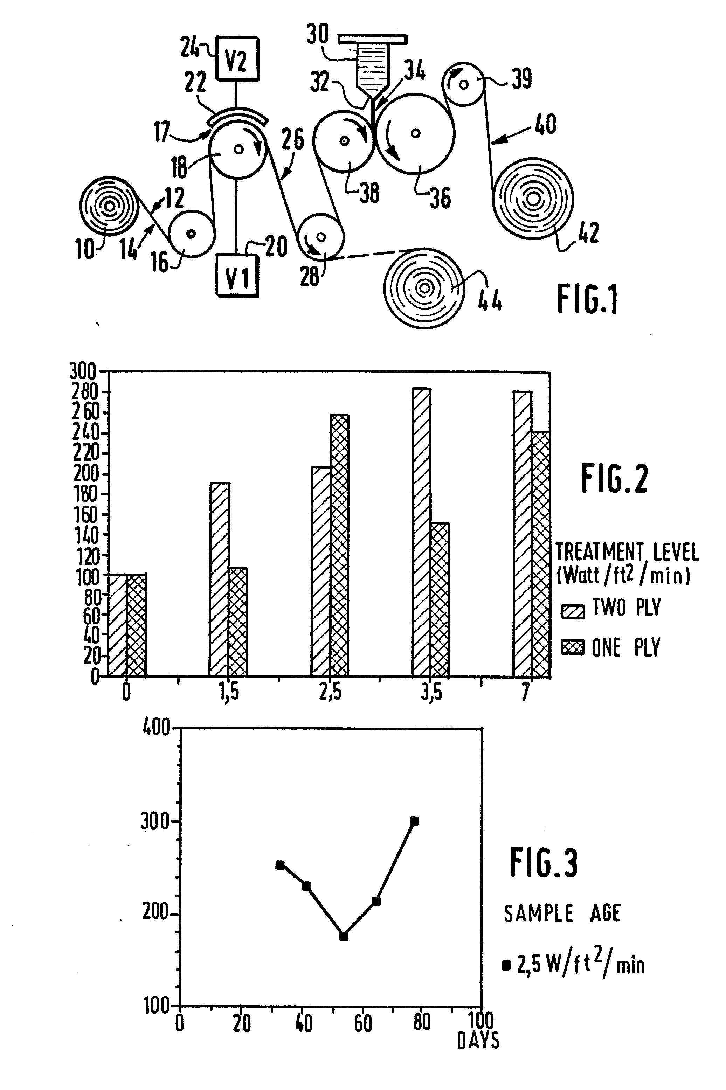

Referring to Fig. 1, a supply roll 10 has wound thereon two plies 12 and 14 of paper. Plies 12 and 14 are loosely in contact but are not bonded to each other. Plies 12 and 14 pass around roll 16 and then through a corona-treatment gap 17 which is between a roll electrode 18 connected to a voltage source 20 (which could be at ground potential or at some other potential) and a fixed electrode 22 connected to a voltage source 24 (which is at a potential different from that of electrode 20). The material emerging from gap 17 is in the form of a multi-ply, corona-treated web 26. This multi-ply web 26 goes around a roll 28 and can be utilized either as is or after coating it with extruded polyethylene. To effect such coating, molten polyethylene from a supply 30 is extruded through a nozzle 32 onto multi-ply web 26 at an extrusion nip 34 formed between a chill roll 36 and a back-up roll 38. An idler roll 39 is used to ensure adequate wrap around chill roll 36. A coated web 40 emerges from extrusion nip 34 and, after being chilled through contact with chill roll 36 and after passing over idler roll 39, can be wound on a take-up roll 42 or otherwise utilized. In the alternative, the multi-ply, corona-treated web 26 can be utilized as is, and for that purpose can go directly from roll 28 to a take-up roll 44, for use in subsequent processes such as subsequent coating with extruded polyethylene in the manner described above or for other processes.

Each of paper plies 12 and 14 can be smooth or creped or may be pre-treated in some other way. It is not necessary to bond plies 12 and 14 to each other in any way prior to feeding them into gap 17 between electrodes 18 and 22 ; indeed it is a feature of the invention that no pre-bonding and no adhesives are needed. However, if desired for some reason, prior treatments can be applied to paper plies 12 and 14 before they are supplied to gap 17 between electrodes 18 and 22, such as, without limitation, embossing or pressure bonding or adhesive bonding. It should be understood that while in the illustrated embodiment paper plies 12 and 14 are supplied from the same roll 10 this is not necessary ; in fact plies 12 and 14 can be supplied from individual supply rolls or from other sources individually and, if so, can be joined at gap 17 or at some point upstream of and remote from gap 17 by conventional means known in the art for that purpose such as, without limitation, a suitable idler roll.

Gap 17 can be formed as shown between roll electrode 18 and fixed electrode 22. Roll electrode 18 can rotate such that the part contacting ply 14 moves at the same peripheral speed and in the same direction as the contacting portion of ply 14. In the alternative, roll electrode 18 can be stationary, or gap 17 can be formed between differently shaped electrodes. For example, gap 17 can be formed at the spacing between "shoe" electrodes, or between two fixed or rotating roll electrodes. Of course, the electrodes, or at least relevant parts thereof, must be electrically conductive. The conductive parts may but need not be the surfaces contacting plies 14 and or 12, so long as there are potentials which are capable of creating a corona effect at gap 17 which is sufficient to achieve a bond of desired characteristics between plies 12 and 14. Sources 20 and 24 can be voltage sources applying a selected potential difference between electrodes 18 and 22. One of electrodes 18 and 22 can be grounded. The potential difference between electrodes 18 and 22 can vary in accordance with a selected waveform, for example to induce a high frequency corona discharge at gap 17.

Extrusion nip 34 can be formed and utilized in the manner known in the art for extrusion-coating a web with a polymeric material. Usually chill roll 36 is a steel roll which is suitably cooled and back-up roll 38 is a rubber-covered roll. Typically, the characteristics of extrusion nip 34 are such that the molten film of polyethylene deposited on web 26 by extrusion nozzle 32 solidifies before it leaves chill roll 36.

It is believed that the process of extrusion coating further enhances the bond between plies 12 and 14. Again, while the mechanism is not fully understood, one speculation is that this further enhancement of the bond between plies 12 and 14 may be due to some synergism between the bonding due to the corona treatment and the extrusion-coating process and material.

The coated product 40 can be wound on take-up roll 42 as illustrated, or can be otherwise utilized. In the alternative, the multi-ply, corona-treated product 26 can be utilized without extrusion coating. For example it can be taken directly from gap 17 (and roll 28) and wound on take-up roll 44, for later use as is, or for further treatment, such as an extrusion-coating of the illustrated type and/or mechanical embossing. Still in the alternative, an embossing treatment can be applied to the product 26, for example at a point between roll 28 and extrusion nip 34 or take-up roll 44.

In another embodiment, ply 12 can be supplied from one supply roll while ply 14 is supplied from another supply roll. Each of plies 12 and 14 can be corona treated by passing through a respective separate corona gap such as gap 17, and the separately corona treated plies can then be joined into a multi-ply web which is either utilized as is (e.g., is supplied directly to a take-up roll such as 44) or is treated further. The separately corona treated plies can be joined by mechanical embossing which further enhances the bond therebetween. The separately treated plies once joined into a multi-ply web can be subjected to other treatments, such as by extrusion coating of the type shown in Fig. 1 for converting web 26 into web 40. When individual plies are corona treated separately and are then joined to form a multi-ply product, the sides facing the same electrode (or the same polarity electrode) can adjoin each other in the multi-ply material or sides facing different electrodes (or different polarity electrodes) can adjoin each other in the multi-ply material.

In one example of practicing an embodiment of the invention, a sample 1 of a one-ply, 12.5 1b/3000 ft$^2$ BW (basis weight) napkin substrate and a sample 2 of a two-ply, 10.0 1b/300 ft$^2$ BW napkin substrate were tested. Each sample was corona treated at levels of 1.5, 2.5, 3.5, and 7.0 watts/ft$^2$/min and untreated portions of each sample were saved for use as controls. The treatment was applied through passing the samples through the gap of a corona treater at line speed of 100 fpm, using a discharge system having one metal electrode and one silicone covered roll with an electrode gap of 3 inches, operating at 30 KHz and at power output at selected levels between 1.5 and 7.0 watts/ft$^2$/min. For sample 1 (single plies), the corona treatment was applied to the sample and then two plies of the corona treated sample were joined into a multi-ply web at a ply bond embosser. The treated (top) side of one ply was bonded to the untreated (bottom) side of the other ply to form the two-ply web. As a control, two untreated plies of sample 1 were joined into a two-ply web (the control web) at the same embosser. The case of sample two the same corona treatment parameters were used except that a two-ply web passed through the corona gap.

Other tests have been carried with a 3-ply napkin substrate in the form of a 15-1/2 inch roll. It was treated as described for samples 1 and 2 above, except that the corona treatment was applied only to the surface of the top ply and the line speed was 200 fpm. In addition and as an alternative to applying corona treatment to the entire width of the web, tests were carried out in which the corona treatment was applied only to the 3 inch strip at each side margin of the web. Dinner napkins were produced both from the full width treated web and from the web in which only the 3 inch margins were corona treated. In each case the bond between the plies was sufficient to permit acceptable folding of the dinner napkins to which the webs were converted. Two different techniques were used : in one the three plies were joined into a web having plies P1, P2 and P3, in that order, and the corona was applied to the top surface of P1, in the other the corona was applied to one surface of ply P3 only, and, only then, was ply P3 joined to plies P1 and P2 to form the same multi-ply material P1, P2, P3 with the corona trated side of P3 facing P2.

The results showed significant improvements of the corona treated web over the control web. The ply bond strength increased by over 150 % as compared with the control samples. Even more important, the improvement became greater with aging, i.e., the ply bond strength of the control sample decreased with age more than that of the corona treated web. The wet tensile strength appeared to improve with corona treatment. The untreated side of a corona treated ply demonstrated improved ply bond as compared with a ply which was not corona treated but to a lesser degree than the side in direct contact with the corona discharge.

Two of the characteristics of corona treated samples are illustrated in Figs. 2 and 3. In each case the vertical axis is a measure of plybond given as a percentage improvement over the control sample. Fig. 2 suggests that the plybond improvement tends to plateau at a treatment level of about 2.5 - 3.5 watts/ft$^2$/min within the test range of 0 - 7.5 watts/ft$^2$/min. Fig. 3 shows that the plybond measure of the corona treated samples ages well, and indeed starts improving after a decline for the first about 55 days after treatment.

It is believed that the invented process can be successfully applied to cellulosic material having BW at least in the range of about 4 lb/3000 sq ft to 35 lb/3000 sq ft. It should be clear that the tests discussed above are only illustrative of the invention and that the scope of the invention is defined only by the appended claims rather than by the specific parameters of the examples above.

## Claims

1. A method comprising : subjecting two contacting plies of a similar web material to corona treatment to thereby bond said plies to each other and thereby form a multi-ply, corona-treated web ; and utilizing said multi-ply, corona treated web by subjecting said web to further processing.

2. A method as in claim 1 in which said utilizing step comprises extrusion-coating said multi-ply, corona treated web with polyethylene.

3. A method as in claim 2 in which said web material of said contacting plies is paper.

4. A method as in claim 3 in which said corona treatment comprises passing said multi-ply web through the gap between two electrodes.

5. A method as in claim 4 in which said electrodes comprise a roller electrode and a plate electrode, wherein said roller electrode makes contact with said contacting plies.

6. A method comprising passing a multi-ply web in which the plies are of similar materials through a gap in which current flow is established by means of an electrical discharge to thereby bond the plies to each other ; and utilising the resulting multi-ply web by subjecting said resulting web to further processing.

7. A method comprising forming a multi-ply web in which the plies are of similar materials ; and passing the multi-ply web through a corona discharge gap to thereby bond the plies to each other.

8. A method comprising combining a plurality of paper plies into a multi-ply paper web ; and subjecting the multi-ply paper web to a corona discharge treatment to thereby form a bond between said plies which is in addition to a bond therebetween resulting from treatment by other means prior and/or subsequent to said corona discharge treatment.

9. A method of making multi-ply material which is free of inter-ply adhesive comprising : providing a plurality of plies of a similar material ; joining the plies without adhesive to form a multi-ply material ; and subjecting said multi-ply material to a corona treatment to thereby form a bond between said plies which is in addition to a bond between said plies resulting from treatment by other means prior and/or subsequent to said corona discharge treatment.

10. A method comprising bringing two plies of a similar material into contact ; and causing an enhanced bond between the plies by subjecting the contacting plies to a corona treatment, said enhanced bond being in addition to a bond between the plies resulting from treatment by other means prior and/or subsequent to said corona discharge treatment.

11. A method as in claim 10 including the step of coating the material with a polymeric substance after said corona treatment.

EP 0 346 242 A2

FIG.1

FIG.2

TREATMENT LEVEL
(Watt /ft² / min)

TWO PLY

ONE PLY

FIG.3

SAMPLE AGE

2,5 W/ft² /min

DAYS